# EUROPEAN PATENT SPECIFICATION

(11) **EP 2 499 906 B1**
(45) Date of publication and mention of the grant of the patent: **12.03.2014**
(21) Application number: 12001727.2
(22) Date of filing: 14.03.2012
(51) Int. Cl.: A01K 1/01

(54) **Dog urinal**
Urinal für Hunde
Urinoir pour chiens

(30) Priority: 17.03.2011 CZ 201124078 U
(43) Date of publication of application: 19.09.2012
(73) Proprietor: DOG production s.r.o., 616 00 Brno (CZ)
(72) Inventor: Tomecek, Frantisek, 61600 Brno (CZ)
(74) Representative: Kania, Frantisek

(56) References cited:
- EP-A1- 0 852 111
- CH-A5- 662 243
- FR-A1- 2 419 015
- FR-A1- 2 562 764
- JP-A- 2003 061 499
- JP-A- 2005 013 182

## Description

### Field of art

The technical solution relates to a dog urinal, suitable especially for gardens, parks and others places with dogs.

### Prior art

Dogs, especially non-castrated males or dominant females mark their territory with their urine. This behavior lead to death of plants, it damages the poles of trash cans or public lighting, or worse, it damages corners of structures such as houses, fences etc. In these places the concentration of the characteristic smell increases.

Why they lift the back leg? The male dogs do that to mark "their" territory and to overlay the marks of other dogs. This way they send a clear smell signal on a bush or on a street light. Due to the lifted leg they can pee higher so the signal could be spread to all directions. But also some female dogs lift their leg. They are usually females, which are very high in the group hierarchy or they have a high meaning of themselves.

There are some known solutions, for example in JP 2005013182 A a solution is described, which uses a free pipe attached to a bushing or an arm in the area, where there is supposed to be a dog toilet. After a dog urination the base absorbing paper will be cleaned up and replaced with a new one for the next use. The disadvantage of this solution is a necessity to often change the absorbing paper. Due to the fact that the pipe does not have any container, there are no smell traces on it, and therefore it doesn't attract other dogs. Another disadvantage is the fact that the pipe is not provided with a lid so in case of rain it is washed by the rain water and therefore the smell track vanishes. Due to the horizontal arm, it is necessary to attach the pipe to a wall or to another pole, creating another place for dogs to mark. Aiming of the dogs to the inside space is possible only to dogs of the same height and the other dogs stop coming there if they can't at least partially overlay the smell track. This option does not solve the problem of places with higher amount of dogs, such as urban settlements, dog runs, etc. Due to the replacement of the absorbing paper an often interaction of personal is necessary. When placing this toilet to another object it is necessary to have an agreement with the owner of this object to have the toilet attached to this particular object - conflict of guarantees can occur etc.

There is also a solution described in JP 2003061499 A. This solution is based on a potty for a dog kept in an apartment, so after every single urination the urine is poured out and the toilet gets cleaned up so the smell does not spread around the apartment. Placing it outside causes its transportation, because it is not attached to the ground. Caught urine is freely accessible, which worsens the hygienic conditions. Even though this solution is simple, it requires service to keep the toilet clean, which decreases a sticking of the smell track to the toilet.

A dog urinal is known from EP0852111. Its structure is complicated and a frequent and troublesome maintenance is required, the apparatus is susceptible to damage by frost.

### Summary of the invention

The above listed disadvantages are largely eliminated by the dog urinal according to this invention. The principle of this invention is a vertically situated hollow pipe - the body of the urinal, the wall of which comprise at least four through holes and at the bottom of which a container, a drain and/or an overtlow are arranged.

The pipe is advantageously supplied with a lid at its upper part. A draining hose can be connected to the drain and/or to the overflow.

The pipe can be attached to a paved or unpaved surface and its surrounding can be designed according to the needs of the surrounding houses, for example sand-cement cushion, gravel, green vegetation etc.

According to an advantageous embodiment the pipe is supplied with at least twenty four through holes in its wall.

Because of the fact that the dog urinal is formed by a free standing vertically situated hollow pipe, other objects such as the building walls, fences etc. do not get dirty. Due to the fact that the pipe is supplied with through holes in its wall, the urine flows to the inside of the pipe and a little amount is captured in the container, which is situated at the bottom of the pipe in its inside area. The captured urine has a strong enough smell track but at the same time it doesn't worsen the hygienic conditions. Due to the urine capture container we can predict with high probability that the dog will overlay its own mark - as it is in its nature. Due to the capture container the dog has a tendency to overlay the smell track of its rivals with its own mark. Due to the small holes along the cylinder, a part of the urine flows straight to the capture container - where there is a diverse composition of smells. The redundant urine drains away through the drain and/or through the overflow, to which the draining hose can be connected with the possibility of connection to the waste for the drainage of the redundant urine straight to the sewerage or to the septic tank. Because of the fact that the pipe is at its upper part supplied with the lid, the smells inside of the pipe do not get washed away.

The pipe can be with its bottom part connected to the base, which is fastened to the ground. This arrangement ensures sufficient stability of the dog urinal. The base material can be chosen according to the surroundings.

If the dog urinal is divided into two parts - the pipe and the base, fastened to the ground, it is possible to place it on all kinds of surfaces. In case of damage it is possible to exchange only a part of the urinal.

The significant advantage is the easy washing of the inner space, if it is necessary, by taking the lid off and rinsing the inner space. The solution allows using a variable color spectrum of the exterior design according to the local conditions or to the customer's wish. Because of the fact that the capacity of the capture container is up to about 0.10 1, the cladding is not damaged due to freezing temperatures. Sufficiency of the holes in different heights ensures the possibility of use for all dog breeds and sizes.

The service requirements are minimal because of the construction, where part of the smell track stays inside and the rest is drained away through the drain and/or through the overflow to the ground or to the waste and washing of the place in case of rain. This particular solution influences the saving of time of the personal, because it can be considered as maintenance- free.

The price demands will be low, and making it of plastic extends the lifetime of the product.

### Brief description of the drawings

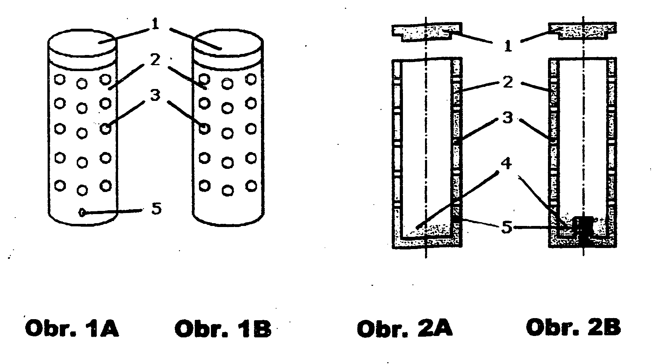

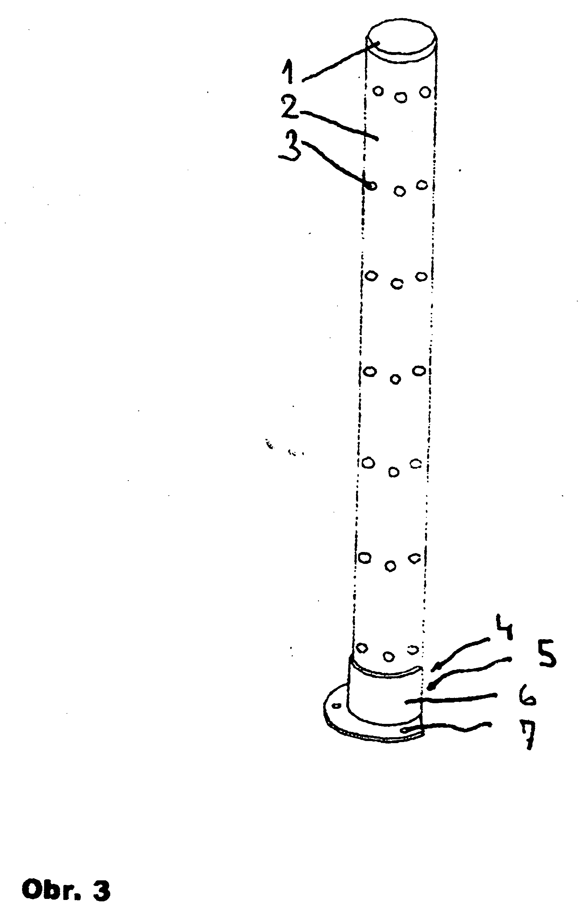

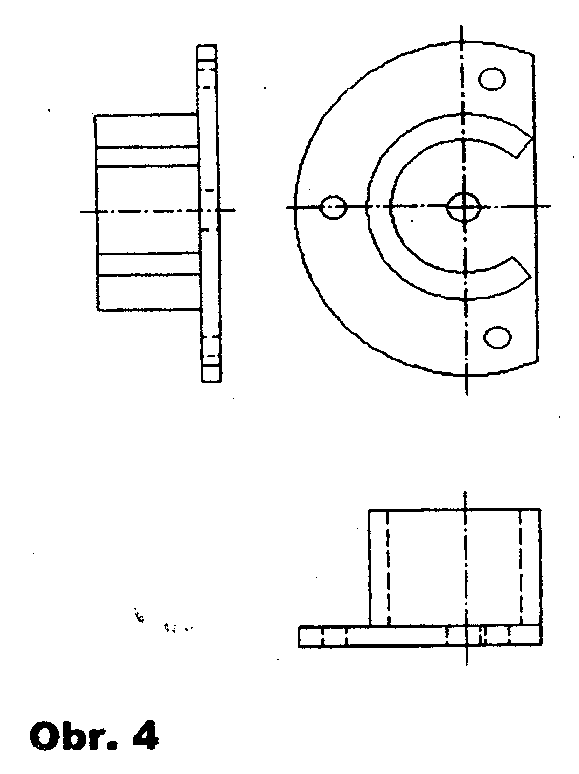

The dog urinal, according to this invention, will be further described in respect of specific embodiment using the attached drawings, therein Fig. 1A shows the dog urinal - the main body in an axonometric view and Fig. 1B shows side view. The Fig. 2A shows the dog urinal - main body in a delineation of the cross section in a dismembered state and Fig. 2B shows the side view. The Fig. 3 is a schema of the entire urinal, including the universal bushing for attachment to any kind of surface. The Fig. 4 is a universal attachment bushing - base of the dog urinal in a delineation, side and plan view.

### Examples of the preferred embodiments

The dog urinal is formed by the vertically situated hollow pipe - the body **2** of the urinal supplied with the through holes **3,** arranged in different heights, and the number of the holes **3** can be 4 to 60 or more. At the bottom inside of the urinal body **2** the capture container **4** and the overflow **5** are located. The overflow 5 is connected to the not shown draining hose for drainage of the redundant urine to the sewerage or to the septic tank. The body **2** of the urinal is at its upper end supplied with the lid **1**. The urinal body **2** is with its bottom part inserted to the universal attachment bushing **6** and by the fixtures **7** it is possible to attach the dog urinal to any kind of surface.

The preferred embodiment of the dog urinal is intended for capturing of the smell track of the urine. The anchoring part, formed by the universal attachment bushing **6** is placed in the area, where there is supposed to be this dog urinal. Then the urinal body **2** and the lid **1** is slipped over said universal attachment bushing **6**. It is recommended to design the place around the urinal to suit the surroundings. Due to the capture container **4** inside of the dog urinal and due to the small holes **3** around it the spreading of the smell track is ensured, which forces the dogs to search this place and mark it with its own mark. The captured smell track is not entirely washed away after every rain, because the inner of the urinal body **2** is protected by the lid **1**.

The dog urinal is made of three parts - lid **1**, urinal body **2**, which is provided with 4 to 60 urinal holes **3** and inside of the urinal body **2** there is the drain and/or the overflow **5** and the capture container **4**. The urinal body **2** is inserted into the universal attachment bushing **6** with the fixtures 7 for attachment to any kind of surface.

The dog urinal can be placed or used in the gardens, parks, public areas, dog areas and the dog training areas. It is also possible to place it in front of the buildings, to the city centers with set bounds and marked with a sign dog toilet, to the urban settlements and to other places.

### Industrial applicability

The dog urinal according to this invention will find its application especially in gardens, parks, public areas etc.

## Claims

1. Dog urinal comprising a vertically situated hollow pipe - the body (2) of the urinal and a lid (1) provided at the upper end of the body (2) of the urinal, the wall of the pipe comprising at least four through holes (3) and being provided at its bottom with a capture container (4) **characterized in that** a drain and/or an overflow (5) for draining urine to a sewerage or to a septic tank are arranged at the bottom of the pipe, wherein the capacity of the container is up to 0.10 1.

2. The dog urinal according to the claim 1 **characterized in that** a draining hose is connected to the drain and/or to the overflow (5).

3. The dog urinal according to any of the previous claims **characterized in that** the body (2) of the urinal is with its bottom part connected to the base (6) of the dog urinal, which is fastened to the ground.

4. The dog urinal according to any of the previous claims **characterized in that** the body (2) of the urinal has at least 24 urinal through holes (3) on its wall.

## Patentansprüche

1. Hundepissoir, das ein vertikal angeordnetes Hohlrohr - den Pissoirkörpers (2) - und einen am oberen Ende des Pissoirkörpers (2) angeordneten Deckel (1) enthält, wobei die Wand des Hohlrohrs mindestens vier Durchgangslöcher (3) enthält und mit einem Aufnahmebehälter (4) an deren Boden versehen ist, **dadurch gekennzeichnet, dass** ein Ablauf und / oder Überlauf (5) beim Boden des Rohrs angeordnet ist, um Harn zu einer Abwasserleitung oder zu einem Reservoir abzuleiten, und wobei die Kapazität des Aufnahmebehälters bis 0,10 Liter ist.

2. Hundepissoir nach Anspruch 1, **dadurch gekennzeichnet, daß** ein Ablaufschlauch an den Ablauf und / oder Überlauf (5) angesehlossen ist.

3. Hundepissoir nach einem der vorhergehenden Ansprüche 1, **dadurch gekennzeichnet, daß** der Pissoirkörper (2) mit seinem unteren Teil an einem Basiselement (6) des Pissoirkörpers (2) angeschlossen ist, wobei das Basiselement zum Boden befestigt ist.

4. Hundepissoir nach einem der vorhergehenden Ansprüche 1, **dadurch gekennzeichnet, daß** der Pissoirkörper (2) wenigstens 24 Durchgangslöcher (3) für Harn an seiner Wand enthält.

## Revendications

1. Urinoir de chien comprenant un tuyau creux situé verticalement - un corps (2) de l'urinoir et un couvercle (1) au bout haut du corps (2) de l'urinoir, où la paroi du tuyau comprend au moins quatre trous (3) de passage et est munie en sa base d'un réservoir (4) de retenue, **caractérisé en ce qu'**en la base du tuyau, il y a un déchargeoir et/ou un décersement (5) pour l'évacuation de l'urine dans l'égout ou dans une fosse septique, où la capacité du réservoir estjusqu'à 0.101.

2. Urinoir de chien selon la revendication 1, **caractérisé en ce qu'**un flexible de vidange est raccordée au déchargeoir et/ou au décersement (5).

3. Urinoir de chien selon l'une quelconque des revendications précédentes **caractérisé en ce que** le corps (2) de l'urinoir est par son dessous raccordé à la base de l'urinoir, qui est fixé au sol.

4. Urinoir de chien selon l'une quelconque des revendications précédentes **caractérise en ce que** le corps (2) de l'urinoir a au moins 24 trous (3) de passage de l'urine à sa paroi.
